# EUROPEAN PATENT APPLICATION

(11) **EP 4 202 814 A1**
(43) Date of publication of application: **28.06.2023**
(21) Application number: 22206143.4
(22) Date of filing: 08.11.2022
(51) Int. Cl.: G06Q 20/02, G06Q 20/20, G06Q 20/32, G06Q 20/40, G06Q 20/42

(54) **CARD PAYMENT METHOD AND SYSTEM THROUGH APPLICATION LINKAGE**

(30) Priority: 21.12.2021 KR 20210183806; 07.01.2022 KR 20220002554; 07.02.2022 KR 20220015526
(71) Applicant: Park, Hee Young, Seoul 05551 (KR)
(72) Inventor: Park, Hee Young, Seoul 05551 (KR)
(74) Representative: Grünecker Patent- und Rechtsanwälte PartG mbB

(57) **Abstract**

Provided are a card payment method and system through application linkage. More particularly, provided are a card payment method and system through application linkage, wherein applications are installed on a payment terminal and a user terminal, a payment card is linked to the application on the user terminal, an application server manages the linkage, and in the case of a payment transaction, the application server performs a relay between the payment terminal and the user terminal so that transaction information input to the payment terminal is checked with the user terminal, and the payment terminal completes the transaction with a signature and tip setting input to the user terminal.

## Description

### CROSS REFERENCE TO RELATED APPLICATION

The present application claims priority to Korean Patent Application No. 10-2022-0015526, filed February 7, 2022 and Application No. 10-2022-0002554, filed January 7, 2022 and Application No. 10-2021-0183806, filed December 21, 2021, the entire contents of which is incorporated herein for all purposes by this reference.

### BACKGROUND OF THE INVENTION

### Field of the Invention

The present disclosure relates to a card payment method and system through application linkage. More particularly, the present disclosure relates to a card payment method and system through application linkage, wherein applications are installed on a payment terminal and a user terminal, a payment card is linked to the application on the user terminal, an application server manages the linkage, and in the case of a payment transaction, the application server performs a relay between the payment terminal and the user terminal so that transaction information input to the payment terminal is checked with the user terminal, and the payment terminal completes the transaction with a signature and tip setting input to the user terminal.

### Description of the Related Art

Currently, when a payment is made using a physical card in a seller's store or shop, the card is read by a payment terminal, such as a POS device, a transaction and approval are requested from VAN company and card company servers, and the approval is received to complete the payment transaction. In this card payment transaction, a purchaser may put a payment card manually to a card reader of a payment terminal, for example, inserting a card into an IC reader, swiping a card through a magnetic reader or tagging a card to an NFC reader, but mostly, a purchaser hands the card to a seller and the seller enters the card. At this time, a transaction information screen of the payment terminal can be checked only by the seller in most cases. Therefore, even when a wrong transaction amount is input, it takes time for the purchaser to recognize this. In addition, it is inconvenient to cancel the transaction and conduct the transaction again. Further, all setting values, such as an amount, a signature, and a tip, related to a transaction are input to the payment terminal and the payment terminal makes a request for approval, so there is a possibility that is may lead to fraudulent charging.

In the related art, there is Korean Patent No. 10-1799875 "POS TERMINAL" (registration date, 15 November 2017) disclosing that a POS terminal includes a first display device, a second display device, and a main body. The first display device is coupled to the main body and provides information corresponding to a signal received from the main body. The second display device is coupled to the main body such that the second display device is easily detached from/attached to the main body. The second display device provides information corresponding to a signal received from the main body. Provided is the POS terminal that includes the main body controlling the first display device and the second display device.

According to the invention in the related art, two transaction picture screen devices are provided and one of the display devices is positioned toward a purchaser, so that the purchaser views a transaction amount and recognizes the transaction amount or information. However, the invention in the related art has a problem in that it is impossible to prevent card information from leaking in the process of handing over a card and receiving the cart. In addition, when the POS terminal requests payment approval independently and there is a problem with the transaction, it is unclear who among the purchaser and the seller is responsible, which is highly likely to lead to transaction disputes.

In the related art, there is Korean Patent No. 10-1458775 "METHOD FOR APPLICATION EXECUTION AND PAYMENT LINKED WITH PAIRED APPARATUS, AND DIGITAL SYSTEM FOR THE METHOD" (registration date, 31 October 2014) disclosing a method for application execution and payment linked with a paired apparatus, and a digital system for the method. The method for application execution and payment linked with the paired apparatus may include: performing, by the digital system, near field communication with a particular paired apparatus; executing, by the digital system, a particular application predetermined corresponding to the paired apparatus, in response to the performed near field communication; and performing, by the digital system when a particular payment request is input by a user while the application is executed, control such that payment corresponding to the payment request is made by using a paired payment means corresponding to the paired apparatus subjected to the near field communication, as a payment means.

According to the invention in the related art, payment is made through near field communication between the application of the paired apparatus and the digital system, so that a payment transaction with improved security is achieved. However, when the paired apparatus is copied or stolen, damage caused by illegal use occurs. Even if the user checks a transaction state and finds an error in the amount or other errors, it is difficult to cancel the transaction in advance.

The foregoing is intended merely to aid in the understanding of the background of the present disclosure, and is not intended to mean that the present disclosure falls within the purview of the related art that is already known to those skilled in the art.

### Documents of Related Art

(Patent Document 001) Korean Patent No. 10-1799875 "POS TERMINAL"
(Patent Document 002) Korean Patent No. 10-1458775 "METHOD FOR APPLICATION EXECUTION AND PAYMENT LINKED WITH PAIRED APPARATUS, AND DIGITAL SYSTEM FOR THE METHOD"

### SUMMARY OF THE INVENTION

The present disclosure is directed to providing a card payment method and system through application linkage including a card payment transaction method through a user terminal, a payment terminal, and an application server, wherein the user terminal and the payment terminal have applications installed thereon, the applications being linked with a payment card.

According to an aspect of the present disclosure, there is provided a card payment system through application linkage, the system including: a user terminal on which a user terminal application linked with a payment card is installed, and configured to conduct a payment transaction; a payment terminal configured to conduct the transaction with the payment card linked to the user terminal application; and an application server configured to perform a relay between the user terminal and the payment terminal.

In an embodiment, the user terminal may include: a communication part configured to perform a wireless communication function; an input part configured to input a user's choice, signature, or biometric information, such as a fingerprint, a voice, a face, and an iris, through a screen touch, a microphone, and a camera; an output part configured to a notification and the user terminal application through a screen of the user terminal and a voice; a storage part configured to store therein card information linked to the user terminal application; the user terminal application installed on the user terminal, and configured to conduct the payment transaction; and a controller configured to control and manage the communication part, the input part, the output part, the storage part, and the user terminal application.

In an embodiment, the payment terminal may include: a communication part configured to perform wired and wireless communication functions; an input part configured to input an amount, a quantity, and a seller's choice through a screen touch and a button input; an output part configured to output transaction information to a screen of the payment terminal, and output a paper receipt when the transaction is completed; a storage part configured to store therein the transaction information and quantity in stock; a card reader configured to read the payment card; a payment terminal application installed on the payment terminal, and configured to conduct the transaction through the application server; a transaction part configured to generate the transaction information with an input price and the input quantity; and a controller configured to control and manage the communication part, the input part, the output part, the storage part, the card reader, the payment terminal application, and the transaction part.

In an embodiment, the application server may include: a communication part configured to be connected to the user terminal, the payment terminal, and a card company server through wired and wireless communication; a storage part configured to store therein affiliated-store information of a seller and payment card information linked to the user terminal application; and an operation part configured to check the payment card information and linkage information, and identify locations of the payment terminal and the user terminal to determine a distance therebetween.

In an embodiment, the user terminal application may be linked with the payment card and may conduct the card payment transaction.

In an embodiment, card protection may be set such that the payment card linked to the user terminal application may conduct a transaction only through the user terminal application.

In an embodiment, the payment terminal may make a request to the application server for verification to determine whether the input payment card is the payment card linked to the user terminal application.

In an embodiment, the payment terminal application and the user terminal application may be the same program or compatible programs.

According to another aspect of the present disclosure, there is provided a card payment method through application linkage, wherein a card payment transaction is conducted with a user terminal and a payment terminal that are linked with each other via a user terminal application, the card payment method including: inputting payment card information to an application server to link a payment card to the user terminal application; generating, by a transaction part of the payment terminal, transaction information on the basis of an input quantity and an input amount; inputting the linked payment card to a card reader of the payment terminal; recognizing, by the payment terminal, the input payment card; making a request to the application server for linkage verification to check whether the payment card input to the payment terminal is the payment card linked to the user terminal application; checking, by the application server, whether the input payment card is the linked payment card and transmitting a result of check; transmitting the transaction information from the payment terminal to the application server; transmitting the transaction information from the application server to the user terminal; receiving, by the user terminal, the transaction information, giving a notification, and running the user terminal application; outputting the transaction information and tip and signature input windows by an output part of the user terminal, and inputting a tip setting of a user and user confirmation input details, such as a signature and biometric information, to an input part of the user terminal; transmitting, by the user terminal, the input tip setting and the input user confirmation input details, such as the signature and the biometric information, to the application server; transmitting the tip setting and the user confirmation input details, such as the signature and the biometric information, from the application server to the payment terminal; outputting the tip setting and information on whether the user is authenticated, according to the user confirmation input details to a screen of the payment terminal; making, by the payment terminal, a request to the application server for final payment approval; making, by the application server, a request to a card company server for payment approval, and transmitting the fact that the payment approval is obtained, to the payment terminal and the user terminal when the payment approval from the card company server is completed; and outputting, by the payment terminal, a transaction result to the screen of the payment terminal and as a paper receipt, and outputting, by the user terminal, a transaction result receipt and an advertisement image or an advertisement video containing a voice to a screen of the user terminal.

In an embodiment, the user confirmation input details may mean inputting the signature and the biometric information for biometric recognition, such as pupil recognition, face recognition, fingerprint recognition, and voice recognition, wherein the signature and the biometric information may be capable of authenticating the user.

In an embodiment, in the transmitting, by the user terminal, of the input tip setting and the input user confirmation input details, such as the signature and the biometric information, to the application server, a location of the user terminal and a location of the payment terminal may be identified and a distance therebetween may be calculated, and when the distance is greater than a distance preset by the application server, the application server may cancel the transaction.

In an embodiment, in the transmitting, by the user terminal, of the input tip setting and the input user confirmation input details, such as the signature and the biometric information, to the application server, the application server may transmit a location check message to the user terminal, the user terminal may output the location check message as a notification and may transmit location information to the application server, the application server may calculate a distance between the user terminal and the payment terminal, and when the distance is greater than a distance set by the user terminal and the application server, the application server may cancel the transaction.

In an embodiment, in the making, by the application server, of the request to the card company server for the payment approval and the transmitting of the fact that the payment approval is obtained, to the payment terminal and the user terminal when the payment approval from the card company server is completed, the application server itself may execute the payment approval and complete the payment, instead of receiving the payment approval from the card company server.

In an embodiment, in the outputting of the transaction information and the tip and signature input windows by the output part of the user terminal and the inputting of the tip setting of the user and the user confirmation input details, such as the signature and the biometric information, to the input part, when the input details are not input for more than a time period preset by the user terminal, the user terminal may cancel the transaction automatically.

According to the present disclosure, the user is capable of checking transaction information and conducing or canceling a transaction through the user terminal 100, so that when there is an error in a payment amount, the transaction can be canceled before the transaction is completed.

In addition, the tip setting and information on whether the user is authenticated, according to the signature and the user confirmation input details input by the user cannot be changed in the payment terminal 200. Therefore, when a transaction is abnormal, it is clear who among the user and the seller is responsible and payment disputes can be prevented.

In addition, the payment terminal 200 cannot independently request payment approval, and a tip, a signature, and user confirmation input details need to be input from the user terminal 100. Therefore, final payment approval can be requested only for the payment that both the user and the seller have checked, so that an unreliable transaction can be prevented.

In addition, card protection is set such that a payment card is used only for the transaction linked to the application, thereby enhancing security.

In addition, transaction prohibition is set according to the distance between the user terminal and the payment terminal, so that damage caused by illegal use of a card or by a copied card can be prevented.

In addition, when there is no response from the user terminal within a set time period, the transaction is automatically canceled, so that the payment transaction that the user is unaware of can be prevented.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a diagram illustrating a configuration of a user terminal of a card payment system through application linkage according to an embodiment of the present disclosure;
FIG. 2 is a diagram illustrating a configuration of a payment terminal of a card payment system through application linkage according to an embodiment of the present disclosure;
FIG. 3 is a diagram illustrating a configuration of an application server of a card payment system through application linkage according to an embodiment of the present disclosure;
FIG. 4 is a flowchart illustrating a card payment method through application linkage according to an embodiment of the present disclosure;
FIG. 5 is a diagram illustrating an example that shows whether payment is made or not depends on a distance between a user terminal and a payment terminal in a card payment method through application linkage according to an embodiment of the present disclosure;
FIG. 6 is a diagram illustrating an example of actual use of a card payment method through application linkage according to an embodiment of the present disclosure;
FIG. 7 is a picture illustrating an example of actual use of a card payment method through application linkage according to an embodiment of the present disclosure;
FIG. 8 is a diagram illustrating an example of actual use of a card payment method through application linkage according to an embodiment of the present disclosure;
FIG. 9 is a diagram illustrating an example of actual use of a card payment method through application linkage according to an embodiment of the present disclosure;
FIG. 10 is a diagram illustrating an example of actual use of a card payment method through application linkage according to an embodiment of the present disclosure;
FIG. 11 is a diagram illustrating an example of actual use of a card payment method through application linkage according to an embodiment of the present disclosure; and
FIG. 12 is a picture illustrating an example of actual use of a card payment method through application linkage according to an embodiment of the present disclosure.

### DETAILED DESCRIPTION OF THE INVENTION

Hereinbelow, exemplary embodiments of the present disclosure will be described in detail with reference to the accompanying drawings such that the present disclosure can be easily embodied by those skilled in the art to which this present disclosure belongs. However, description of the present disclosure is merely embodiments for structural or functional description, so the scope of the present disclosure should not be construed to be limited to the embodiments described herein. That is, since the embodiments can be variously modified and have various forms, it should be understood that the scope of the present disclosure includes equivalents capable of implementing the technical idea. In addition, it is not meant that a particular embodiment should include all the objectives or effects presented in the present disclosure or should include only such effects. Therefore, it should not be understood that the scope of the present disclosure is limited thereby.

The meanings of the terms used in the present disclosure should be understood as follows.

Terms "first" and "second" are for distinguishing one element from another, and the scope of the present disclosure should not be limited by the terms. For example, a "first" element may be named a "second" element, and a "second" element may also be similarly named a "first" element. It will be understood that when an element is referred to as being "connected" to another element, it can be directly coupled or connected to the other element or intervening elements may be present therebetween. In contrast, it will be understood that when an element is referred to as being "directly connected" to another element, there are no intervening elements present. In the meantime, other expressions describing relationships between elements, for example, "between ~" and "directly between ~" or "adjacent to ~" and "directly adjacent to ~", should be similarly interpreted.

A singular form may include a plural form if there is no clearly opposite meaning in the context. It is to be understood that terms such as "including", "having", etc. are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added.

Unless otherwise defined in the specification, all terms used herein have the same meaning as commonly understood by one of ordinary skill in the art to which the present disclosure belongs. It will be further understood that terms used herein should be interpreted as having a meaning that is consistent with their meaning in the context of this specification and the relevant art and will not be interpreted in an idealized or overly formal sense unless expressly so defined herein.

A card payment system through application linkage according to an embodiment of the present disclosure includes a user terminal 100 and a payment terminal 200 that have applications, and an application server 300.

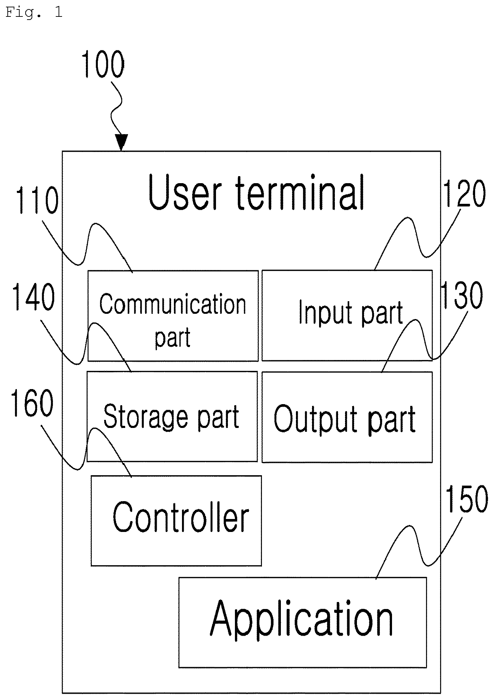

As shown in FIG. 1, the user terminal 100 includes: a communication part 110 for performing wireless communication with the payment terminal 200 and the application server 300; an input part 120 for inputting a user's choice and signature or biometric information, such as a fingerprint, a voice, a face, and a pupil, through a screen touch, a microphone, and a camera; an output part 130 for outputting a notification and a user terminal application through a screen and a voice; a storage part 140 for storing therein card information linked to the user terminal application; the user terminal application 150 installed on the user terminal and for conducting a payment transaction; and a controller 160 for controlling and managing the communication part 110, the input part 120, the output part 130, the storage part 140, and the user terminal application 150.

The wireless communication performed by the communication part 110 is a type of wireless communication, such as Wi-Fi and LTE-A, available in a smartphone or a tablet PC. The communication part 110 performs a function of connecting the user terminal 100 and the application server 300 by wireless communication and transmits location information of the user terminal to the application server.

The user terminal application 150 receives information on a payment card before a transaction, stores the information in the storage part 140 of the user terminal 100, and transmits the information to the application server 300. In addition, the user terminal application 150 sets a response time limit of the user terminal 100 and a transaction-authorized distance, and stores the same.

The user terminal application 150 is the same program as a payment terminal application 260 of the payment terminal 200 or a program compatible with the same.

When a user's input is not made within the set time period in the user terminal application 150 during a payment transaction, the controller 160 cancels the transaction.

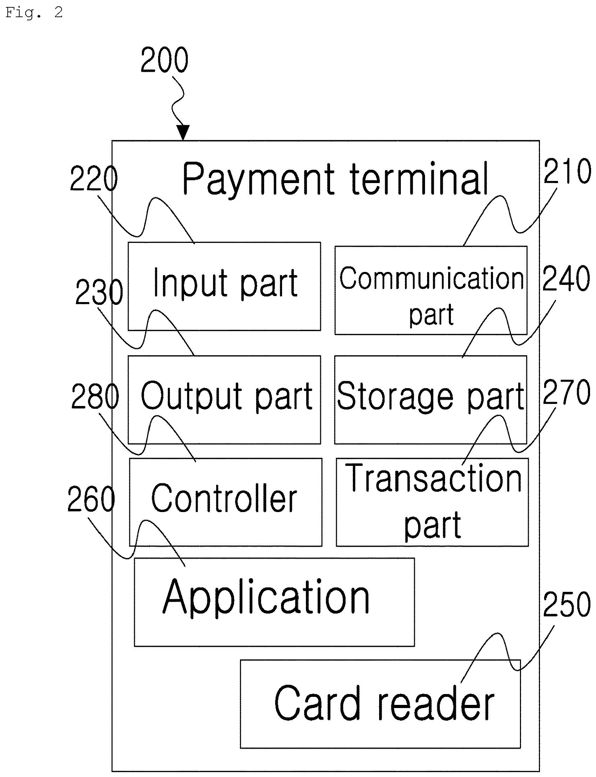

As shown in FIG. 2, the payment terminal 200 includes: a communication part 210 for performing wireless and wired communication with the application server 300; an input part 220 for inputting an amount, a quantity, and a seller's choice through a screen touch and a button input; an output part 230 for outputting a general transaction and an application transaction to a screen, and outputting paper receipts when the transactions are completed; a storage part 240 for storing therein transaction information and quantity in stock; a card reader 250 for reading a payment card; a payment terminal application 260 installed on the payment terminal and for conducting a transaction; a transaction part 270 for generating transaction information with an input price and the input quantity; and a controller 280 for controlling and managing the communication part 210, the input part 220, the output part 230, the storage part 240, the card reader 250, the payment terminal application 260, and the transaction part 270.

The wireless communication performed by the communication part 210 is a type of wireless communication, such as Wi-Fi and LTE-A, through which a smartphone or a tablet PC is capable of performing reception. The communication part 210 performs wireless communication with the application server 300 and transmits location information to the application server.

The card reader 250 reads a card, selecting and using two or more methods that include an RFID tag method, among various methods of reading an MS card and an IC card.

The payment terminal application 260 is the same program as the user terminal application 150 or a program compatible with the same.

The payment terminal application 260 checks whether the card read by making a request to the application server for verification is the card linked to the user terminal application 150. When the card is the card linked to the user terminal application 150, the payment terminal application 260 outputs an application transaction screen and conducts the transaction.

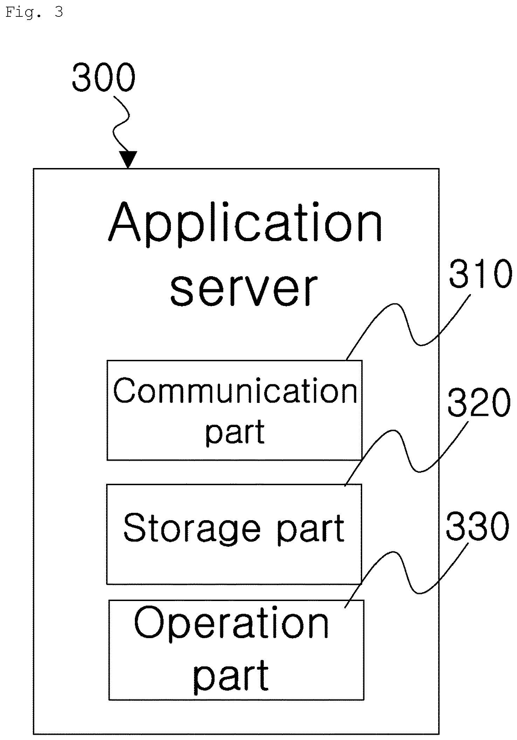

As shown in FIG. 3, the application server 300 includes: a communication part 310 for being connected to the user terminal 100, the payment terminal 200, and a card company server through wired and wireless communication; a storage part 320 for storing therein payment card information linked to the user terminal application 150 and affiliated-store information of a seller that uses the payment terminal 200; and an operation part 330 for checking payment card information and linkage information, and identifying locations of the payment terminal 200 and the user terminal 100 to determine a distance therebetween.

The communication part 310 is connected to the card company server (not shown) so that the application server 300 transmits a request to the card company server for final payment approval and receives transaction approval processing. In addition, the IP addresses of the connected user terminal 100 and payment terminal 200 are checked.

When receiving a request for verification from the payment terminal 200, the operation part 330 verifies the corresponding payment card information in the storage part 320 to check whether there is a matched card. In addition, the operation part 330 calculates the distance between the user terminal 100 and the payment terminal 200 from location information checked from the IP addresses of the user terminal 100 and the payment terminal 200, and checks the stored payment-authorized distance setting. When the distance between the two locations is greater than the set payment-authorized distance, the transaction is blocked.

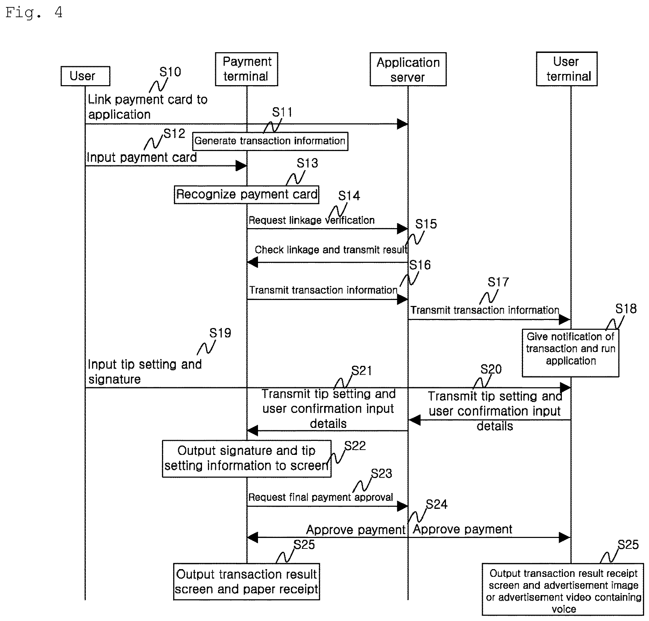

The card payment system, which has the above-described configuration, through application linkage according to the embodiment of the present disclosure conducts a card payment transaction in the following way. As shown in FIG. 4, this card payment method includes: inputting payment card information to the application server 300 to link a payment card to the user terminal application 150 at step S10; generating, by the transaction part 270 of the payment terminal 200, transaction information on the basis of an input quantity and an input amount at step S11; inputting the linked payment card to the card reader 250 of the payment terminal 200 at step S12; recognizing the input payment card by the payment terminal 200 at step S13; making a request to the application server 300 for linkage verification to check whether the payment card input to the payment terminal 200 is the card linked to the user terminal application 150 at step S14; checking, by the application server 300, whether the input payment card is the linked payment card and transmitting a result of check at step S15; transmitting the transaction information from the payment terminal 200 to the application server 300 at step S16; transmitting the transaction information from the application server 300 to the user terminal 100 at step S17; receiving, by the user terminal 100, the transaction information, giving a notification, and running the user terminal application at step S18; outputting the transaction information and tip and signature input windows by the output part 130 of the user terminal 100, and inputting a tip setting of the user and user confirmation input details, such as the user's signature and biometric information, to the input part 120 at step S19; transmitting, by the user terminal 100, the input tip setting and the input user confirmation input details, such as the signature and the biometric information, to the application server 300 at step S20; transmitting the tip setting and the user confirmation input details, such as the signature and the biometric information, from the application server 300 to the payment terminal 200 at step S21; outputting the tip setting and information on whether the user is authenticated, according to the user confirmation input details to the screen of the payment terminal 200 at step S22; making, by the payment terminal 200, a request to the application server 300 for final payment approval at step S23; making, by the application server 300, a request to the card company server for payment approval and transmitting the fact that the payment approval is obtained, to the payment terminal 200 and the user terminal 100 when the payment approval from the card company server is completed at step S24; and outputting, by the payment terminal 200, a result of transaction to the screen of the payment terminal 200 and as a paper receipt, and outputting, by the user terminal 100, a transaction result receipt and an advertisement image or an advertisement video containing a voice to the screen of the user terminal 100 at step S25.

The user confirmation input details mean inputting a signature and biometric information for biometric recognition, such as pupil recognition, face recognition, fingerprint recognition, and voice recognition, wherein the signature and the biometric information are capable of authenticating the user.

In the step S10 of inputting the payment card information to the application server 300 to link the payment card to the user terminal application 150, the user may input card information of the payment card through the user terminal 100 or by directly accessing the application server 300, and the card information of the payment card is stored in the storage part 320 of the application server 300.

In the step S15 of checking, by the application server 300, whether the input card is the linked card and transmitting the result of check, the application server 300 checks whether there is payment card information matched to the input payment card information among pieces of payment card information stored in the storage part 320, and transmits a linkage confirmation signal when the payment card information matched to the input payment card information exists.

In the step S17 of transmitting the transaction information from the application server 300 to the user terminal 100, additionally, a text message or a similar text message using a SNS messenger is transmitted to check the transaction information and a transaction attempt, so that the user may check this before or without running the user terminal application 150 on the user terminal 100.

In the step S18 of receiving, by the user terminal 100, the transaction information, giving the notification, and running the user terminal application 150, when the user terminal 100 receives the transaction information, the user terminal 100 produces a vibration or a voice to notify the user that the transaction information has received, and runs the user terminal application 150 so that the transaction is conducted.

In the step S19 of outputting the transaction information and the tip and signature input windows by the output part 130 of the user terminal 100, and inputting the tip setting of the user and the user confirmation input details, such as the signature and the biometric information, to the input part 120, the tip setting may be output as a check window which can be chosen at the output part, and the user may check a desired tip ratio (for example, 15 %, 10 %, 5 %, and No tip) to choose. In addition, the user may input the signature by tapping and moving a pen for a smartphone or his or her finger on the signature input window below the tip setting, may input his or her fingerprint by tapping the screen, may be subjected to voice recognition through a microphone, or may make the input part recognize his or her face or pupil through a camera, whereby user authentication is performed. In addition, when a user's input is not made within a preset time period, the user terminal application 150 cancels the transaction automatically to prevent the transaction that the user is unaware of.

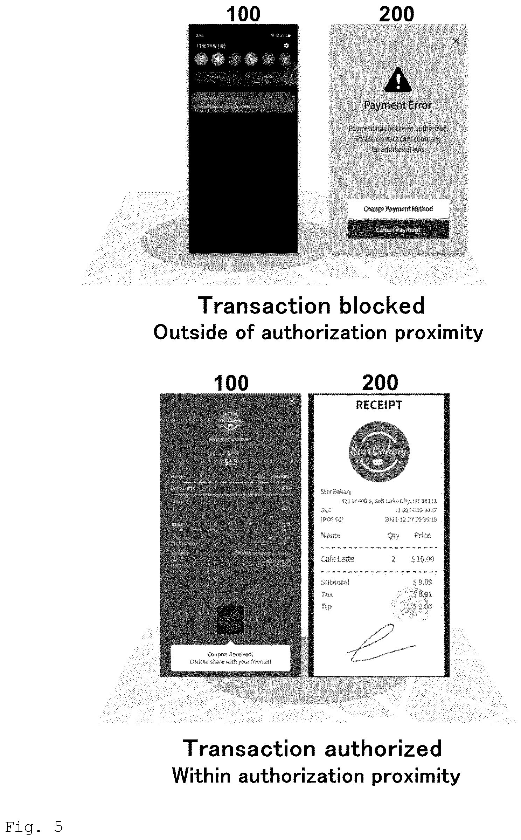

In the step S20 of transmitting, by the user terminal 100, the input tip setting and the input user confirmation input details, such as the signature and the biometric information, to the application server 300, the following is performed: with a user location identification technique in which the operation part 330 calculates a distance between the user terminal 100 and the payment terminal 200 on the basis of location information of the user terminal 100 and the payment terminal 200 collected by the communication part 310 of the application server 300, when the distance measured as a result of calculation is greater than the payment-authorized distance set by the application server 300, the application server 300 cancels the transaction as shown in FIG. 5.

Alternatively, when the application server 300 does not identify the location of the user terminal 100 automatically, the following process may be performed: the application server 300 transmits a location check message to the user terminal 100, the user terminal 100 outputs the location check message as a notification and transmits location information to the application server 300, and the application server 300 identifies the location of the user terminal 100. Afterward, a process of canceling the transaction after calculating the distance between the user terminal 100 and the payment terminal 200 is the same as that described above.

In addition, the payment-authorized distance set by the application server 300 may be reset by changing the same or inputting a new payment-authorized distance by the user terminal 100.

In the step S24 of making, by the application server 300, the request to the card company server for the payment approval and transmitting the fact that the payment approval is obtained, to the payment terminal 200 and the user terminal 100 when the payment approval from the card company server is completed, the application server itself may execute the payment approval and complete the payment, instead of receiving the payment approval from the card company server.

As described above, when the application server 300 cancels the transaction, the application server 300 transmits a blockage record to the user terminal 100 by a text message, a message of a registered messenger, or a means similar thereto, the user terminal 100 gives the user a notification that the blockage record has received, and outputs the blockage record to the screen. In addition, a function of requesting suspension of use to stop the payment card used for a blocked transaction is activated through the user terminal application 150, or the user may easily request suspension of use of the payment card suspected of being illegally used or copied, through the user terminal application 150. In addition, the signature or user confirmation input details of a payer who has attempted illegal use or illegal payment may be used as the basis data for legal punishment, so that the crime is prevented by increasing the liability for risk of illegal use or illegal copy.

In the step S22 of outputting the signature and the tip setting information to the screen of the payment terminal 200, only a final confirmation button is activated on the screen of the payment terminal 200 and the payment terminal 200 allows the seller to only check the signature and the tip setting.

In addition, in the card payment method, which is performed as described above, through application linkage, instead of inputting the linked payment card to the payment terminal 200, information of the linked payment card is output to the screen of the user terminal 100 through the user terminal application 150, the information of the linked payment card output to the screen of the user terminal 100 is tagged with the payment terminal 200 to read the information of the linked payment card, and the transaction may be conducted as in the case of inputting the payment card.

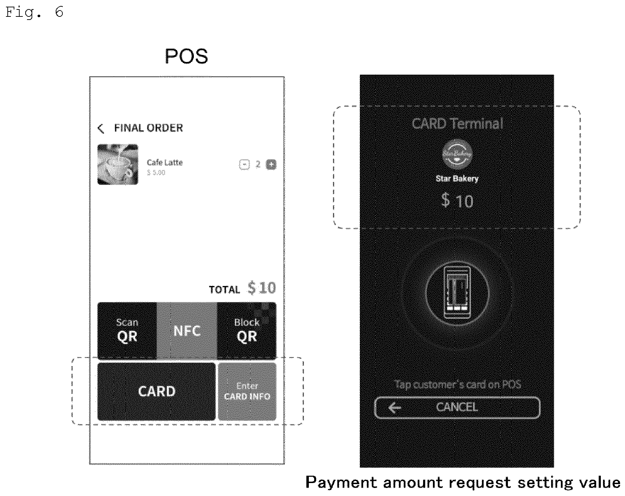

Describing the card payment method, which is performed as described above, through application linkage in more detail with an actual example, the card payment method works as shown in FIGS. 6 to 12.

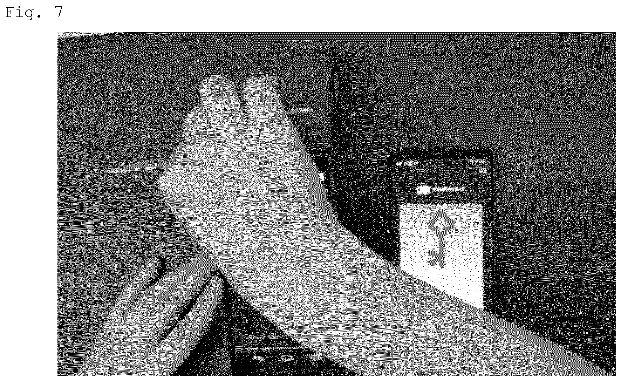

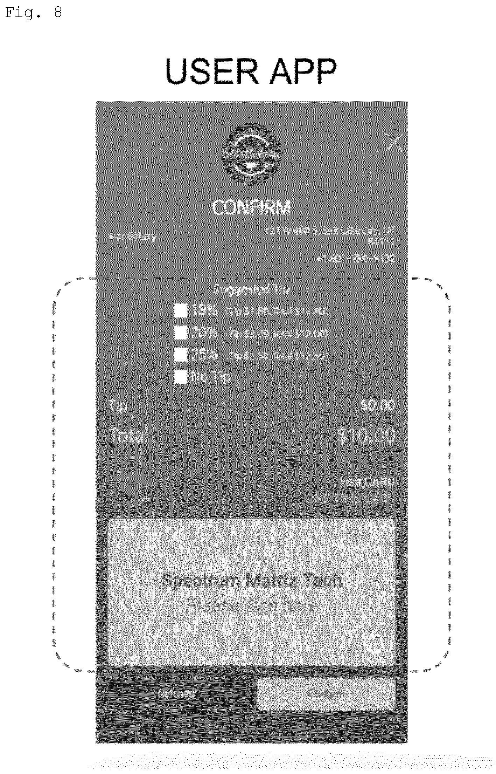

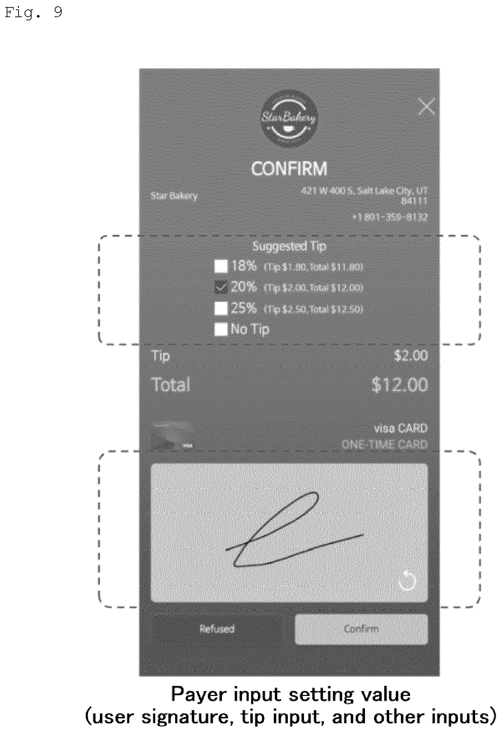

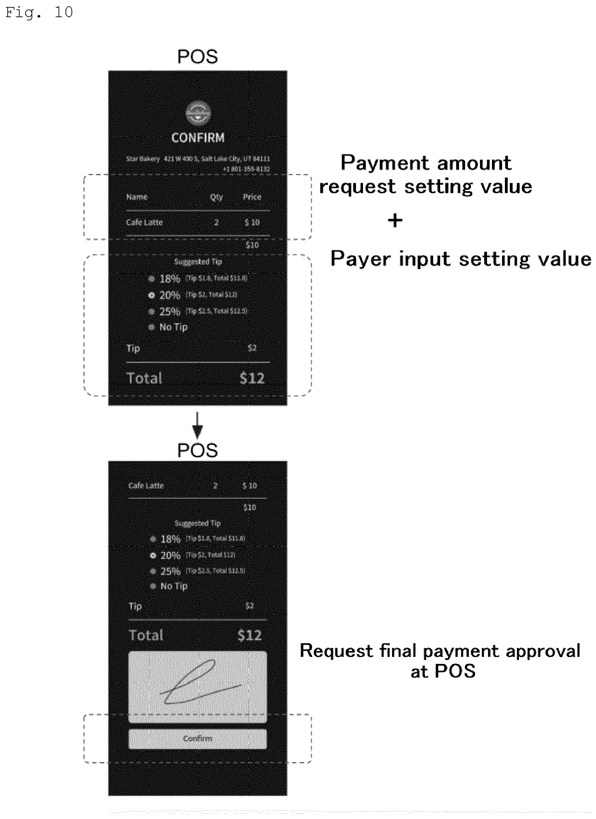

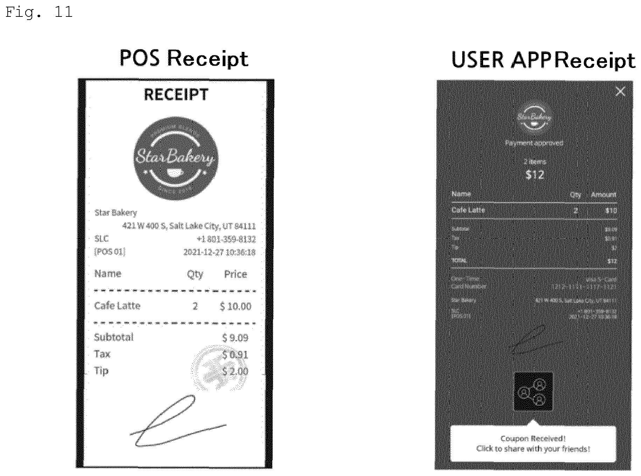

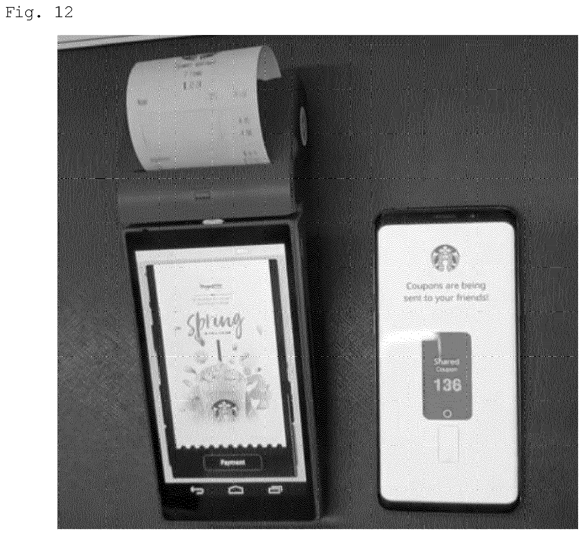

First, as shown in FIG. 6, a seller inputs the quantity and the price of an article to be transacted to the payment terminal 200, so that transaction information is generated. Afterward, as shown in FIG. 7, a payment card is input. When input of the payment card is completed, the user terminal application 150 is run on the user terminal 100 as shown in FIG. 8, and the transaction information and tip selection and signature windows are output so that the user checks the transaction information and the transaction is conducted. When the transaction information is correct, the tip setting is selected as shown in FIG. 9. Options, 15 %, 20 %, 25 %, and No tip, are shown in the figure, but may be changed in advance corresponding to a transaction environment. When the tip setting is selected, the signature input window appears in a white quadrangle below the tip setting. A signature is input to the signature input window or biometric information for biometric recognition, such as pupil recognition, face recognition, voice recognition, and fingerprint recognition, is input instead of the signature to authenticate the user (not shown). Next, when the confirmation button is clicked, the tip setting and the signature are output to the screen of the payment terminal 200 and the seller is unable to change the tip setting and the signature and is allowed only to check the same as shown in FIG. 10. When the final confirmation button is clicked, a transaction result and a receipt screen are output to the user terminal 100 and the payment terminal 200 as shown in FIG. 11. Next, as shown on the left of FIG. 12, the payment terminal 200 outputs a paper receipt. When there are details related to reward points or a coupon, the screen of the user terminal 100 outputs the coupon or reward point information as shown on the right of FIG. 12 and after a while, an advertisement image or advertisement video (not shown) containing a voice is output.

In this process, the user terminal 100 and the payment terminal 200 conduct and complete the transaction with the relay by the application server 300. When the distance between the two terminals 100 and 200 is greater than the set payment-authorized distance or there is no response from the user terminal 100 for a set time period or more, the application server 300 recognizes the transaction to be unreliable and may cancel the transaction.

According to the card payment method and system through application linkage described above, the user is capable of checking transaction information and conducting or canceling a transaction through the user terminal 100, so that when there is an error in a payment amount, the transaction can be canceled before the transaction is completed.

According to the card payment method and system through application linkage described above, a tip and information on whether the user is authenticated, according to the signature and the user confirmation input details input by the user cannot be changed in the payment terminal 200. Therefore, when a transaction is abnormal, it is clear who among the user and the seller is responsible and payment disputes can be prevented.

According to the card payment method and system through application linkage described above, the payment terminal 200 cannot independently request payment approval, and a tip, a signature, and user input details need to be input from the user terminal 100. Therefore, final payment approval can be requested only for the payment that both the user and the seller have checked, so that an unreliable transaction can be prevented.

According to the card payment method and system through application linkage described above, card protection is set such that a payment card is used only for the transaction linked to the application, thereby enhancing security.

According to the card payment method and system through application linkage described above, transaction prohibition is set according to the distance between the user terminal 100 and the payment terminal 200, so that damage from illegal use with a stolen card or copied card can be prevented.

According to the card payment method and system through application linkage described above, when there is no response from the user terminal 100 within a set time period, the transaction is automatically canceled, so that the payment transaction that the user is not completely aware of can be prevented.

The embodiments of the present disclosure are realized not only through the above-described apparatus and/or operation method, but also a program or a recording medium on which the program is recorded, the program for realizing the functions corresponding to the configurations of the embodiments of the present disclosure. Such realization can be easily made by a person skilled in the art to which the present disclosure pertains, from the above-described embodiments. Although the preferred embodiments of the present disclosure have been described for illustrative purposes, those skilled in the art will appreciate that various modifications, additions, and substitutions are possible, without departing from the scope and spirit of the disclosure as disclosed in the accompanying claims.

## Claims

1. A card payment system through application linkage in a card payment transaction, the card payment system comprising:
a user terminal (100) on which a user terminal application linked with a payment card is installed, and configured to enable the payment transaction to be conducted through the user terminal application;
a payment terminal (200) on which a payment terminal application compatible with the user terminal application linked with the payment card is installed, and configured to enable the payment transaction to be conducted through the payment terminal application; and
an application server (300) configured to manage the user terminal application linked with the payment card, and perform a relay of the transaction between the user terminal (100) and the payment terminal (200).

2. The card payment system of claim 1, wherein the user terminal (100) comprises:
a communication part (110) configured to perform a wireless communication function;
an input part (120) configured to input a choice, a signature, a voice, a pupil, and a face of a user through a screen touch, a microphone, and a camera;
an output part (130) configured to output a notification and the user terminal application through a screen of the user terminal (100) and a voice;
a storage part (140) configured to store therein card information linked to the user terminal application;
the user terminal application (150) installed on the user terminal, and configured to conduct the payment transaction; and
a controller (160) configured to control and manage the communication part, the input part, the output part, the storage part, and the user terminal application.

3. The card payment system of claim 1, wherein the payment terminal (200) comprises:
a communication part (210) configured to perform wired and wireless communication functions;
an input part (220) configured to input an amount, a quantity, and a seller's choice through a screen touch and a button input;
an output part (230) configured to output a general transaction and an application transaction to a screen of the payment terminal (200), and output paper receipts when the transactions are completed;
a storage part (240) configured to store therein transaction information and quantity in stock;
a card reader (250) configured to read the payment card;
the payment terminal application (260) installed on the payment terminal, and configured to conduct the application transaction;
a transaction part (270) configured to generate the transaction information with an input price and the input quantity; and
a controller (280) configured to control and manage the communication part, the input part, the output part, the storage part, the card reader, the payment terminal application, and the transaction part.

4. The card payment system of claim 1, wherein the application server (300) comprises:
a communication part (310) configured to be connected to the user terminal (100), the payment terminal (200), and a card company server through wired and wireless communication;
a storage part (320) configured to store therein payment card information linked to the user terminal application (150) and affiliated-store information of a seller that uses the payment terminal (200); and
an operation part (330) configured to check the payment card information and linkage information, and identify locations of the payment terminal (200) and the user terminal (100) to determine a distance therebetween.

5. A card payment method through application linkage, wherein a card payment transaction is conducted with a user terminal and a payment terminal that are linked with each other via a user terminal application, the card payment method comprising:
inputting payment card information to an application server (300) to link a payment card to the user terminal application (150) (S10);
generating, by a transaction part (270) of the payment terminal (200), transaction information on the basis of an input quantity and an input amount (S11);
inputting the linked payment card to a card reader (250) of the payment terminal (200) (S12);
recognizing, by the payment terminal (200), the input payment card (S13);
making a request to the application server (300) for linkage verification to check whether the payment card input to the payment terminal (200) is the payment card linked to the user terminal application (150) (S14);
checking, by the application server (300), whether the input payment card is the linked payment card and transmitting a result of check (S15);
transmitting the transaction information from the payment terminal (200) to the application server (300) (S16);
transmitting the transaction information from the application server (300) to the user terminal (100) (S17);
receiving, by the user terminal (100), the transaction information, giving a notification, and running the user terminal application (S18);
outputting the transaction information and tip and signature input windows by an output part (130) of the user terminal (100), and inputting a tip setting of a user and user confirmation input details to an input part (120) of the user terminal (100) (S19);
transmitting, by the user terminal (100), the input tip setting and the input user confirmation input details to the application server (300) (S20);
transmitting the tip setting and the user confirmation input details from the application server (300) to the payment terminal (200) (S21);
outputting the tip setting and information on whether the user is authenticated, according to the user confirmation input details to a screen of the payment terminal (200) (S22);
making, by the payment terminal (200), a request to the application server (300) for final payment approval (S23);
making, by the application server (300), a request to a card company server for payment approval, and transmitting the fact that the payment approval is obtained, to the payment terminal (200) and the user terminal (100) when the payment approval from the card company server is completed (S24); and
outputting, by the payment terminal (200), a transaction result to the screen of the payment terminal and as a paper receipt, and outputting, by the user terminal (100), a transaction result receipt and an advertisement video containing a voice to a screen of the user terminal (S25).

6. The card payment method of claim 5, wherein in the transmitting, by the user terminal (100), of the input tip setting and the input user confirmation input details to the application server (300) (S20), a location of the user terminal (100) and a location of the payment terminal (200) are identified and a distance therebetween is calculated, and when the distance is greater than a distance preset by the application server (300), the application server (300) cancels the transaction.

7. The card payment method of claim 5, wherein in the outputting of the transaction information and the tip and signature input windows by the output part (130) of the user terminal (100) and the inputting of the tip setting of the user and the user confirmation input details to the input part (120) (S19), when the input details are not input for more than a time period preset by the user terminal (100), the user terminal (100) cancels the transaction automatically.

8. The card payment method of claim 6, wherein when the distance between the payment terminal (200) and the user terminal (100) is greater than the preset distance and the application server (300) cancels the transaction, the application server (300) transmits a blockage record to the user terminal (100), the user terminal (100) gives a notification of the blockage record and outputs the blockage record to the screen of the user terminal (100), and the user terminal application (150) enables requesting suspension of use of the payment card used for a blocked transaction.

9. The card payment method of claim 5, wherein in the transmitting of the transaction information from the application server (300) to the user terminal (100) (S17), a notification text message for checking the transaction information and a transaction attempt is additionally transmitted.

10. The card payment method of claim 5, wherein the user confirmation input details are details for authenticating the user and the fact that the transaction is recognized and conducted, and as the user confirmation input details, a signature or biometric information of the user or both are used, the biometric information being for biometric recognition including pupil recognition, face recognition, fingerprint recognition, and voice recognition.

11. The card payment method of claim 5, wherein in the outputting, by the payment terminal (200), of the transaction result to the screen and as the paper receipt and the outputting, by the user terminal (100), of the transaction result receipt and the advertisement video containing the voice to the screen (S25), the advertisement video containing the voice is convertible to an advertisement image containing the voice.

12. The card payment method of claim 5, wherein in the transmitting, by the user terminal (100), of the input tip setting and the input user confirmation input details to the application server (300) (S20), the application server (300) transmits a location check message to the user terminal (100), the user terminal (100) outputs the location check message as a notification and transmits location information to the application server (300), the application server (300) calculates a distance between the user terminal (100) and the payment terminal (200), and when the distance is greater than a distance set by the user terminal (100) and the application server (300), the transaction is canceled.

13. The card payment method of claim 6 or 12, wherein the distance set by the application server (300) is changed to the distance set by the user terminal (100).

14. The card payment method of claim 5, wherein the making, by the application server (300), of the request to the card company server for the payment approval and the transmitting of the fact that the payment approval is obtained, to the payment terminal (200) and the user terminal (100) when the payment approval from the card company server is completed (S24) is convertible to completing, by the application server (300), the payment approval and transmitting the fact that the payment approval is obtained, to the payment terminal (200) and the user terminal (100).

15. The card payment method of claim 5, wherein instead of the inputting of the linked payment card to the payment terminal (200), the card information of the linked payment card output to the screen of the user terminal (100) is tagged with the payment terminal (200) and read by the payment terminal (200), and the payment transaction is conducted.
